# EUROPEAN PATENT APPLICATION

(11) **EP 4 475 206 A1**
(43) Date of publication of application: **11.12.2024**
(21) Application number: 23822737.5
(22) Date of filing: 29.03.2023
(51) Int. Cl.: H01M 4/13, H01M 4/36

(54) **ELECTRODE PLATE, BATTERY CELL, AND BATTERY**

(30) Priority: 17.06.2022 CN 202210688696
(71) Applicant: Zhuhai CosMX Battery Co., Ltd., Zhuhai, Guangdong 519180 (CN)
(72) Inventor: ZHOU, Qiao, Zhuhai, Guangdong 519180 (CN); CHEN, Sha, Zhuhai, Guangdong 519180 (CN); LI, Guoliang, Zhuhai, Guangdong 519180 (CN); PENG, Ning, Zhuhai, Guangdong 519180 (CN)
(74) Representative: Murgitroyd & Company
(86) International application number: PCT/CN2023/084617
(87) International publication number: WO 2023/241166

(57) **Abstract**

The present application provides an electrode plate, a battery cell, and a battery. The electrode plate provided in the present disclosure includes a current collector and an active material layer disposed on at least one surface of the current collector. The active material layer includes active material particles, the active material particles include a silicon-based material, a skeleton layer is provided outside the silicon-based material, and a proportion of a fluorine element gradually increases in a direction from the silicon-based material to the skeleton layer. The electrode plate, the battery cell, and the battery provided in the present disclosure are used to at least solve a technical problem that the battery is prone to volume expansion.

## Description

The present disclosure claims priority to Chinese Patent Application No. 202210688696.6, filed with the China National Intellectual Property Administration on June 17, 2022, and entitled "ELECTRODE PLATE, BATTERY CELL, AND BATTERY", which is incorporated herein by reference in its entirety.

### FIELD OF THE INVENTION

The present disclosure relates to the field of lithium-ion batteries, and in particular, to an electrode plate, a battery cell, and a battery.

### BACKGROUND OF THE INVENTION

Lithium-ion batteries are widely used in various fields. With continuous development of electronic technologies, higher requirements are imposed on capacities and cycling performance of batteries. Research and development of a negative electrode plate with good electrochemical performance is a hot topic in lithium-ion battery research.

Commercial lithium-ion batteries mostly use a graphite-based material as a negative electrode, and a specific capacity of the graphite-based material is only 372 mAh/g, which is difficult to improve. However, a theoretical specific capacity of silicon is up to 4200 mAh/g. In addition, silicon has a wide source, a low price, and environmental friendliness, and an energy density of a lithium-ion battery may be significantly improved by using an electrode plate processed by using a silicon-based material. However, in a charging and discharging process, volume expansion occurs on the electrode plate made of silicon-based material. Consequently, the active material layer is pulverized and detached, and cycling performance of a lithium battery is reduced.

Therefore, it is urgent to solve a technical problem that an electrode plate is prone to volume expansion.

### BRIEF DESCRIPTION OF THE INVENTION

The present disclosure provides an electrode plate, a battery cell, and a battery, to at least solve a technical problem that the electrode plate is prone to volume expansion.

To achieve the foregoing objective, the present disclosure provides an electrode plate. The electrode plate includes a current collector and an active material layer disposed on at least one surface of the current collector. The active material layer includes active material particles, the active material particles include a silicon-based material, a skeleton layer is provided outside the silicon-based material, and a proportion of a fluorine element gradually increases in a direction from the silicon-based material to the skeleton layer.

According to the electrode plate provided in the present disclosure, because a skeleton layer is provided outside the silicon-based material, and the skeleton layer covers the silicon-based material, the following problem can be solved: a lithium intercalation reaction may occur after the electrode plate is immersed in an electrolyte solution, silicon particles are broken, a SEI film is repeatedly grown, broken, and repaired, and a large quantity of SEI films are accumulated in a growth process, leading to battery expansion, lithium source consumption, capacity fading, low initial efficiency, and deteriorated cycling. The skeleton layer is rich in inert materials, which helps to improve stability of the SEI film, to avoid causing volume expansion of an electrode plate in a lithium intercalation process and pulverization and detachment of an active material layer, thereby improving cycling performance and a cycle life.

In a possible implementation, a proportion of a carbon element gradually increases in the direction from the silicon-based material to the skeleton layer.

In a possible implementation, a proportion of a silicon element gradually decreases in the direction from the silicon-based material to the skeleton layer.

In a possible implementation, a position at which the skeleton layer intersects the silicon-based material has a fluorine element.

In a possible implementation, the active material particles further include a carbon-based material distributed around the skeleton layer.

In a possible implementation, a position at which the skeleton layer intersects the carbon-based material has a phosphorus element.

In a possible implementation, a position at which the skeleton layer intersects the carbon-based material has a sulfur element.

In a possible implementation, the skeleton layer includes at least one of lithium fluoride or lithium carbonate.

In a possible implementation, the silicon-based material includes at least one of a silicon material or a silicon oxide material, and a mass of the silicon material and/or the silicon oxide material accounts for 7% to 50% of a mass of the active material particles; and/or

the carbon-based material includes at least one of graphite or hard carbon.

In a possible implementation, the skeleton layer is an inorganic salt.

In a possible implementation, the proportion of the carbon element increases from 18% to 61% in the direction from the silicon-based material to the skeleton layer.

In a possible implementation, the proportion of the silicon element decreases from 49% to 18% in the direction from the silicon-based material to the skeleton layer.

In a possible implementation, the active material layer is disposed on both surfaces of the current collector.

The present disclosure further provides a battery cell. The battery cell includes a first electrode plate and a second electrode plate, and the second electrode plate is the foregoing electrode plate.

The present disclosure further provides a battery, including a seal housing and the foregoing battery cell. The battery cell is located inside the seal housing.

According to the electrode plate, the battery cell, and the battery provided in the present disclosure, in a process of processing the electrode plate, an active material layer is brought into contact with lithium ions in a lithium material layer in advance, to generate a skeleton layer. During forming of a battery processed in this way, a loss of lithium ions of a positive electrode may be reduced, thereby improving a utilization rate of lithium ions, and improving initial efficiency of the battery.

In addition to the technical problem to be solved by the embodiments of the present disclosure, the technical features constituting the technical solutions, and the beneficial effects brought about by the technical features of these technical solutions, other technical problems to be solved by the electrode plate, the battery cell, and the battery provided in the embodiments of the present disclosure, other technical features included in the technical solutions, and beneficial effects brought about by these technical features will be further described in detail in detailed descriptions of the embodiments.

### BRIEF DESCRIPTION OF THE DRAWINGS

To describe the technical solutions in the embodiments of the present disclosure or in the conventional technology more clearly, the following briefly describes the accompanying drawings required for describing the embodiments or the conventional technology. Apparently, the accompanying drawings in the following description show some embodiments of the present disclosure, and a person of ordinary skill in the art may still derive other drawings from these accompanying drawings without creative efforts.
FIG. 1 is a schematic diagram of a structure of an electrode plate according to an embodiment of the present disclosure.
FIG. 2 is a spot scan SEM diagram of an electrode plate according to an embodiment of the present disclosure.
FIG. 3 is a line graph of element content change at positions A, B, C, and D around a silicon material of an electrode plate in FIG. 2 according to an embodiment of the present disclosure.
FIG. 4 is a comparison diagram of cycling performance curves between a battery provided in an embodiment of the present disclosure and an existing battery.
FIG. 5 is a comparison diagram of cycling performance-expansion curves between a battery provided in an embodiment of the present disclosure and an existing battery.

### Reference numerals:

10: current collector;
20: active material layer; and
30: skeleton layer.

### DETAILED DESCRIPTIONS OF THE INVENTION

To make the objectives, technical solutions, and advantages of the present disclosure clearer, the following clearly and completely describes the technical solutions in the present disclosure with reference to the accompanying drawings in the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

Compared with a graphite material, a silicon material has the highest theoretical lithium intercalation capacity of about 4200 mAh/g, which may greatly improve a capacity of a battery. However, in a process of lithium deintercalation and intercalation, a serious volume expansion effect occurs in an electrode plate of the silicon material, which easily causes an active material layer to be pulverized and detached, and reduces the capacity and cycle life of the battery.

After the electrode plate is immersed in an electrolyte solution, a lithium intercalation reaction occurs. An active material layer 20 is in contact with lithium ions in the electrolyte solution to form a solidelectroly teinterface (SEI for short) film. In a charge-discharge cycle process of the battery, silicon particles are broken, and the SEI film is repeatedly grown, broken, and repaired. In this way, a large quantity of SEI films are accumulated in a growth process, leading to battery expansion, lithium source consumption, capacity fading, low initial efficiency, and deteriorated cycling.

In view of the foregoing background, the electrode plate, the battery cell, and the battery provided in the present disclosure are provided with an inorganic salt layer outside a silicon material as a core, and the inorganic salt layer is rich in inert materials LiF, which helps to improve stability of the SEI film, to avoid causing volume expansion of an electrode plate in a lithium intercalation process, and pulverization and detachment of an active material layer, thereby improving cycling performance and cycle life.

An electrode plate, a battery cell, and a battery that are provided in the present disclosure are described below with reference to accompanying drawings.

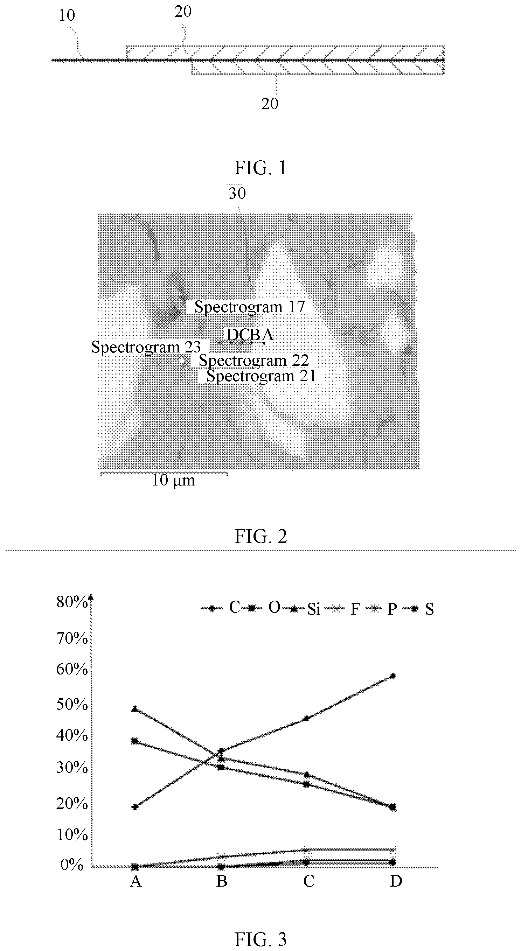

As shown in FIG. 1, the present disclosure provides an electrode plate. The electrode plate includes a current collector 10 and an active material layer 20 disposed on at least one surface of the current collector 10. The active material layer 20 includes active material particles, the active material particles include a silicon-based material, a skeleton layer 30 is provided outside the silicon-based material, and a proportion of a fluorine element gradually increases in a direction from the silicon-based material to the skeleton layer 30.

In consideration of a problem that a lithium intercalation reaction may occur after the electrode plate is immersed in an electrolyte solution to perform forming, silicon particles are broken, and a SEI film is repeatedly grown, broken, and repaired, leading to battery expansion, lithium source consumption, capacity fading, low initial efficiency, and deteriorated cycling, the present disclosure provides an electrode plate. The skeleton layer 30 is provided outside the silicon-based material, and the skeleton layer 30 helps to improve stability of the SEI film, to avoid causing volume expansion of the electrode plate in a lithium intercalation process and pulverization and detachment of the active material layer 20, thereby improving cycling performance and cycle life.

In a possible implementation, the skeleton layer 30 is an inorganic salt, and the skeleton layer 30 may be generated by intercalation of lithium from a lithium material layer into silicon particles in the active material layer 20.

A lithium material layer may be disposed on a surface of the active material layer 20, so that the skeleton layer 30 is formed outside the silicon-based material as a core. It is easily understood that, the lithium material layer is rich in metal lithium, and the lithium reacts with the silicon-based material to generate the skeleton layer 30.

In a possible implementation, the skeleton layer 30 includes at least one of lithium fluoride (LiF) or lithium carbonate (Li₂CO₃). Because the skeleton layer 30 is rich in inert materials LiF, stability of the SEI film may be effectively improved.

A chemical reaction formula for generating the skeleton layer 30 is as follows:

PF₆⁻ + ne⁻ + nLi⁺ →LiF↓ + LiₓPF_{y}↓

2CO₂ + 2e⁻ + 2Li⁺ →Li₂CO₃↓ + CO

In a process of processing the electrode plate, the active material layer 20 is brought into contact with lithium ions in the lithium material layer in advance to form a SEI film in advance. During forming when the electrode plate is processed into a battery, a loss of lithium ions of a positive electrode may be reduced, thereby improving a utilization rate of lithium ions, and improving initial efficiency of the battery.

In a possible implementation, a surface density of lithium in the lithium material layer ranges from 0.09 mg/cm² to 0.5 mg/cm², and the lithium material layer is disposed on a surface of the active material layer 20 by rolling.

In a possible implementation, a position at which the skeleton layer 30 intersects the silicon-based material has a fluorine element, so that a negative electrode plate can be used to generate a SEI film. Because the skeleton layer 30 is coated outside the silicon-based material, the position at which the skeleton layer 30 intersects the silicon-based material is a first boundary position of the skeleton layer 30. With reference to a position at which a point B in FIG. 2 is located, the first boundary position of the skeleton layer 30 is connected to the silicon-based material.

In a possible implementation, the active material particles further include a carbon-based material distributed around the skeleton layer 30.

In a possible implementation, a position at which the skeleton layer 30 intersects the carbon-based material has a phosphorus element. The position at which the skeleton layer 30 intersects the carbon-based material is a second boundary position of the skeleton layer 30. With reference to a position at which a point C in FIG. 2 is located, the second boundary position of the skeleton layer 30 is connected to the carbon-based material. A second boundary of the skeleton layer 30 is opposite to a first boundary of the skeleton layer 30. Phosphorus has a high specific capacity and high rate performance, which helps improve performance of the battery.

In a possible implementation, a position at which the skeleton layer 30 intersects the carbon-based material has a sulfur element, and a boundary position between the skeleton layer 30 and the carbon-based material is the second boundary position of the skeleton layer 30.

In a possible implementation, a core is a silicon-based material, and the active material particles further include a carbon-based material distributed around the skeleton layer 30.

In a possible implementation, the silicon-based material includes at least one of a silicon material or a silicon oxide material, and a mass of the silicon material or the silicon oxide material accounts for 7% to 50% of a mass of the active material particles.

In a possible implementation, the carbon-based material includes at least one of graphite or hard carbon.

In a possible implementation, the silicon-based material includes a silicon oxide material, the carbon-based material includes graphite, and the graphite may be artificial graphite, natural graphite, or modified graphite. A mass of the silicon-based material accounts for 7% to 50% of a mass of graphite, so that an amount of metal lithium matches an amount of the silicon-based material.

In a possible implementation, the silicon material includes silicon particles, the carbon-based material includes a hard carbon material and graphite, and the graphite may be artificial graphite, natural graphite, or modified graphite. Correspondingly, a surface density of lithium in the lithium material layer ranges from 0.09 mg/cm² to 0.5 mg/cm², so that an amount of lithium matches an amount of the silicon oxide material.

In a possible implementation, the silicon-based material includes a silicon oxide material, the carbon-based material includes a hard carbon material, a surface density of lithium in the lithium material layer ranges from 0.09 mg/cm² to 0.5 mg/cm², and a mass of the silicon oxide material accounts for 7% to 50% of a mass of the hard carbon material.

In a possible implementation, as shown in FIG. 1, the electrode plate provided in the present disclosure is a negative electrode plate, and the current collector 10 may use copper foil, titanium foil, nickel mesh, stainless steel foil, a lithium copper alloy film, or carbon cloth.

In a possible implementation, the active material layer 20 may be disposed on one surface of the current collector 10, or the active material layer 20 may be disposed on each of both surfaces of the current collector 10.

In a possible implementation, the lithium material layer may be an ultra-thin metal lithium strip. An ultra-thin metal lithium strip is prepared by using an asymmetrical rolling technology, and the lithium material layer is disposed on a surface of the active material layer 20 by rolling, so that the surface of the active material layer 20 implements full covering.

In order to construct an inorganic salt layer rich in inert materials LiF to prevent a problem that silicon particles are broken due to lithium intercalation, a SEI film is repeatedly grown, broken, and repaired, and a large quantity of SEI films are accumulated in a growth process, leading to battery expansion, lithium source consumption, capacity fading, low initial efficiency, and deteriorated cycling, an ultra-thin metal lithium strip is used for pre-lithiation, so that the metal lithium reacts with silicon to construct the inorganic salt layer of the inert materials LiF around the silicon particles.

In a possible implementation, a proportion of a carbon element gradually increases in the direction from the silicon-based material to the skeleton layer 30. As shown in FIG. 2 and FIG. 3, from the silicon-based material to the skeleton layer 30, that is, from a position at which a point A is located to a position at which a point D is located along a direction indicated by an arrow in FIG. 2, as shown in FIG. 3, a proportion of a carbon element at the position at which the point A is located is 18%, a proportion of a carbon element at a position at which the point B is located is 36%, a proportion of a carbon element at a position at which the point C is located is 47%, and a proportion of a carbon element at the position at which the point D is located is 61%. Apparently, from the silicon-based material to the skeleton layer 30, a proportion of a carbon element gradually increases.

In a possible implementation, when the active material particles include graphite and a silicon material, a proportion of a carbon element gradually increases in the direction from the silicon-based material to the skeleton layer 30.

In a possible implementation, a proportion of a silicon element gradually decreases in the direction from the silicon-based material to the skeleton layer 30. As shown in FIG. 2 and FIG. 3, from the silicon-based material to the skeleton layer 30, that is, from a position at which a point A is located to a position at which a point D is located along a direction indicated by an arrow in FIG. 2, as shown in FIG. 3, a proportion of a silicon element at the position at which the point A is located is 49%, a proportion of a silicon element at a position at which the point B is located is 36%, a proportion of a silicon element at a position at which the point C is located is 28%, and a proportion of a silicon element at the position at which the point D is located is 18%. Apparently, from the silicon-based material to the skeleton layer 30, a proportion of a silicon element gradually decreases.

It is easily understood that, when the active material particles include graphite and a silicon material, a proportion of a silicon element gradually decreases in the direction from the silicon-based material to the skeleton layer 30.

In a possible implementation, a content of a phosphorus element in the silicon-based material is 0.

### Example 1

In this example, the lithium material layer is metal lithium foil, and active material particles of the active material layer 20 include graphite and a silicon oxide material. A mass of the silicon oxide material accounts for 7% of a total mass of the active material particles. Correspondingly, a surface density of metal lithium in the lithium material layer may be 0.12.

### Example 2

In this example, the lithium material layer is metal lithium foil, and active material particles of the active material layer 20 include graphite and a silicon oxide material. A mass of the silicon oxide material accounts for 20% of a total mass of the active material particles. Correspondingly, a surface density of metal lithium in the lithium material layer may be 0.22.

### Example 3

In this example, the lithium material layer is metal lithium foil, and active material particles of the active material layer 20 include graphite and a silicon oxide material. A mass of the silicon oxide material accounts for 30% of a total mass of the active material particles. Correspondingly, a surface density of metal lithium in the lithium material layer may be 0.32.

### Example 4

In this example, the lithium material layer is metal lithium foil, and active material particles of the active material layer 20 include graphite and a silicon oxide material. A mass of the silicon oxide material accounts for 40% of a total mass of the active material particles. Correspondingly, a surface density of metal lithium in the lithium material layer may be 0.42.

### Example 5

In this example, the lithium material layer is metal lithium foil, and active material particles of the active material layer 20 include graphite and a silicon oxide material. A mass of the silicon oxide material accounts for 50% of a total mass of the active material particles. Correspondingly, a surface density of metal lithium in the lithium material layer may be 0.50.

In Example 1 to Example 5, the lithium material layer is metal lithium foil, and active material particles of the active material layer 20 include graphite and a silicon oxide material. A mass of the silicon oxide material accounts for 7% to 50% of a total mass of the active material particles. Correspondingly, a surface density of lithium in the lithium material layer ranges from 0.09 mg/cm² to 0.5 mg/cm². In this way, an amount of metal lithium contained in the lithium material layer matches a quantity of silicon particles. If the amount of metal lithium is too large, precipitation occurs because lithium ions react with an electrolyte solution, and a utilization rate of the lithium ions is reduced. If the amount of metal lithium is too small, a pre-lithiation effect is not obvious, and consequently, initial efficiency is not improved obviously.

### Example 6

In this example, the lithium material layer is metal lithium foil, and active material particles of the active material layer 20 include a hard carbon material and a silicon oxide material. A mass of the silicon oxide material accounts for 7% of a total mass of the active material particles. Correspondingly, a surface density of metal lithium in the lithium material layer may be 0.18.

### Example 7

In this example, the lithium material layer is metal lithium foil, and active material particles of the active material layer 20 include a hard carbon material and a silicon oxide material. A mass of the silicon oxide material accounts for 30% of a total mass of the active material particles. Correspondingly, a surface density of metal lithium in the lithium material layer may be 0.28.

### Example 8

In this example, the lithium material layer is metal lithium foil, and active materials of active material particles of the active material layer 20 include a hard carbon material and a silicon oxide material. A mass of the silicon oxide material accounts for 50% of a total mass of the active material particles. Correspondingly, a surface density of metal lithium in the lithium material layer may be 0.34.

In Example 6 to Example 8, the lithium material layer is metal lithium foil, and active material particles of the active material layer 20 include a hard carbon material and a silicon oxide material. A mass of the silicon oxide material accounts for 7% to 50% of a total mass of the active material particles. Correspondingly, a surface density of metal lithium in the lithium material layer ranges from 0.09 mg/cm² to 0.5 mg/cm². In this way, an amount of metal lithium matches an amount of silicon. The following cases are both avoided: If the amount of metal lithium is too large, precipitation occurs because the metal lithium reacts with an electrolyte solution, and a utilization rate of the lithium ions is reduced. If the amount of metal lithium is too small, a pre-lithiation effect is not obvious, and initial efficiency is not improved obviously.

Herein, an electrode plate provided in an embodiment of the present disclosure is selected. During processing, after the active material layer 20 was applied on a surface of the current collector 10, the current collector 10 was baked in a drying environment at a temperature of 90°C for 24 hours, so that moisture is controlled below 300 ppm to obtain a semi-finished electrode plate. Then, an ultra-thin metal lithium strip was prepared by pressing a lithium ingot at a micron level by using an asymmetrical rolling technology, and bonded to the semi-finished electrode plate to prepare the electrode plate.

The present disclosure further provides a battery cell. The battery cell includes a first electrode plate and a second electrode plate, and the second electrode plate is the foregoing electrode plate.

In a possible implementation, the first electrode plate is a positive electrode plate, and the second electrode plate is the foregoing electrode plate and is a negative electrode plate.

The present disclosure further provides a battery, including a seal housing and a battery cell located inside the seal housing. The battery cell includes a first electrode plate and a second electrode plate, and the second electrode plate is the foregoing electrode plate.

During processing, the first electrode plate, the second electrode plate, and a separator were sequentially stacked, so that the separator was located between the first electrode plate and the second electrode plate. The separator is used for separating the first electrode plate from the second electrode plate. Then, winding was performed to obtain a battery cell. The battery cell was placed in a seal housing, and an electrolyte solution was injected into the seal housing. After vacuum packaging, standing, and forming, charging was performed by using a constant current at 0.1C to a 4% state of charge (State of Charge, SOC for short), and then charging was performed by using a constant current at 0.2C to 10% SOC. Shaping and capacity testing were performed to obtain a pouch lithium-ion battery.

In a possible implementation, the seal housing may be an aluminum-plastic film, the electrolyte solution may be lithium hexafluorophosphate, and the separator is an 8-µm coating separator.

To describe the electrode plate provided in the present disclosure, an improvement may be made to achieve an effect of improving expansion of the battery while improving the initial efficiency of the battery. The following tests can be performed on the produced electrode plate:

### Test 1. Cross-sectional morphology test

The electrode plate provided in the present disclosure was sputtered by using a cross section polisher (Cross section polisher, CP for short) device to obtain a cross-section, and then the cross-section was photographed by using a scanning electron microscope (scanning electron microscope, SEM for short) and captured at a magnification of 500 times to 1000 times. A white area indicates silicon particles, and it may be clearly learned that a core of the silicon material is covered with a skeleton layer 30.

### Test 2. Content test of elements around the silicon material

A position at which an SEM acquires a picture is tested and analyzed by using an x-ray energy dispersive spectrometer (EDS for short). FIG. 2 is a spot scan EDS diagram of a 5000 times electron microscope diagram.

The direction indicated by the arrow in FIG. 2 is a direction from the silicon-based material to the skeleton layer 30, where the position A is in the silicon-based material, the position D is in the carbon-based material, the position B and the position C are between the position A and the position D, the position B is a position at which the skeleton layer 30 intersects the silicon-based material, the position C is a position at which the skeleton layer 30 intersects the carbon-based material, and an element analysis of the position A, the position B, the position C, and the position D is shown in FIG. 3. It may be clearly learned from FIG. 3 that, from the position A to the position D, a proportion of a carbon element gradually increases, a proportion of a silicon element gradually decreases, a proportion of a fluorine element gradually increases to the position C and then keeps unchanged, that is, the proportion of the fluorine element gradually increases to the position at which the skeleton layer 30 intersects the carbon-based material and then keeps unchanged, a content of a phosphorus element in the silicon-based material is 0, a content of a sulfur element in the silicon-based material is 0, and a content of the fluorine element in the silicon-based material is 0.

It can be learned from a test result that, in the direction from the silicon-based material to the skeleton layer 30, the proportion of C gradually increases, and the proportion of Si gradually decreases; the F element starts to appear between the position A and the position C, which indicates that a composition LiF of a SEI film is formed on a surface of silicon particles between the position A and the position B. A structure of the skeleton layer 30 constructed on the surface of the silicon particles helps to improve stability of the SEI film, to avoid causing volume expansion of the electrode plate in a lithium intercalation process and pulverization and detachment of the active material layer, thereby improving cycling performance and a cycle life of the battery. In addition, when the battery is formed, lithium intercalated in the second electrode plate may be deintercalated during a cycle process, to improve a battery capacity.

### Test 3. Cycle test and expansion test

The following separately performs a cycle test and an expansion test on batteries of two comparative groups and batteries of two experimental groups. A difference between the batteries selected for the two comparative groups and the batteries selected for the two experimental groups lies only in that the batteries selected for the two experimental groups use the electrode plates provided in the present disclosure as the second electrode plates, and the batteries selected for the comparative groups use conventional second electrode plates, and do not include metal lithium.

The test process includes the following steps:
Step 1: Allowing the battery to stand at a temperature of 5°C±2°C for 10 minutes.
Step 2: Discharging at a battery discharging rate of 0.2C to a lower limit voltage, and standing for 10 minutes.
Step 3: Charging to an upper limit voltage at a battery charging rate of 0.7C, cutting off at 0.05C, and standing for 10 minutes.
Step 4: Discharging at a battery discharging rate of 0.2C to a lower limit voltage, and then performing an initial capacity test.
Step 5: Allowing the battery to stand for 10 minutes.
Step 6: Charging to an upper limit voltage at a battery charging rate of 3C, cutting off at 0.05C, and then testing a thickness of the battery.
Step 7: Allowing the battery to stand at a temperature of 25°C±2°C for 10 minutes.
Step 8: Discharging at a battery discharging rate of 1C to a lower limit voltage, and standing for 10 minutes.
Step 9: Charging to an upper limit voltage at a battery charging rate of 3C, cutting off at 0.05C, and standing for 10 minutes.

Step 9: Performing 1000 cycles of step 8 and step 9, in the cycles 0 to 200, after every 50 cycles, testing the thickness of the battery in a fully charged state, in the cycles 200 to 1000, after every 100 cycles, testing the thickness of the battery in the fully charged state, and in a 25°C temperature environment, repeating step 3 and step 4 to perform a capacity test; and after the 1000 cycles are completed, testing the thickness of the battery in the fully charged state.

### Test 4. Capacity test

For batteries with a same target capacity, four experimental groups of batteries with different target capacities and one comparative group of battery were separately processed at different pre-lithiation surface densities. The batteries were placed in a constant temperature environment of 25°C, charged at a constant current and a constant voltage to 4.48 V by using a battery charging rate of 1C, and then cut off at a constant voltage to 0.05C. After being left to stand for 5 minutes, the batteries were then discharged to 3 V by using a battery discharging rate of 0.2C, and compared with capacity data for 3 V

Results are shown in the following Table 1 to Table 4:

**Table 1**

| Silicon-doped graphite | Comparative group | Experimental group 1 | Experimental group 2 | Experimental group 3 | Experimental group 4 |
|---|---|---|---|---|---|
| Target capacity/mAh | 2430 | | | | |
| Surface density of lithium in a lithium material layer mg/cm² | 0 | 0.12 | 0.15 | 0.17 | 0.19 |
| Silicon doping ratio | 15% | 7% | 10% | 13% | 15% |
| Capacity for 3 V/mAh | 2068 | 2438 | 2442 | 2455 | 2554 |
| Volume expansion rate after 100 charge-discharge cycles | 10.59% | 6.09% | 7.85% | 8.51% | 8.89% |

**Table 2**

| Silicon-doped graphite | Comparative group | Experimental group 1 | Experimental group 2 | Experimental group 3 |
|---|---|---|---|---|
| Target capacity/mAh | 4000 | | | |
| Surface density of lithium in a lithium | 0 | 0.13 | 0.15 | 0.17 |
| material layer mg/cm² | | | | |
| Silicon doping ratio | 15% | 8% | 10% | 15% |
| Capacity for 3 V/mAh | 3429 | 4025 | 4034 | 4078 |
| Volume expansion rate after 100 charge-discharge cycles | 7.52% | 6.23% | 6.60% | 6.77% |

**Table 3**

| Silicon-doped hard carbon | Comparative group | Experimental group 1 | Experimental group 2 | Experimental group 3 | Experimental group 4 |
|---|---|---|---|---|---|
| Target capacity/mAh | 4720 | | | | |
| Surface density of lithium in a lithium material layer mg/cm² | 0 | 0.17 | 0.19 | 0.22 | 0.26 |
| Silicon doping ratio | 15% | 7% | 10% | 15% | 20% |
| Capacity for 3 V/mAh | 4363 | 4751 | 4766 | 4775 | 4781 |
| Volume expansion rate after 100 charge-discharge cycles | 9.63% | 6.85% | 6.99% | 7.39% | 7.51% |

**Table 4**

| Silicon-doped hard carbon | Comparative group | Experimental group 1 | Experimental group 2 | Experimental group 3 |
|---|---|---|---|---|
| Target capacity/mAh | 4300 | | | |
| Surface density of lithium in a lithium material layer mg/cm² | 0 | 0.21 | 0.22 | 0.23 |
| Silicon doping ratio | 15% | 7% | 10% | 15% |
| Capacity for 3 V/mAh | 4000 | 4312 | 4318 | 4324 |
| Volume expansion rate after 100 charge-discharge cycles | 5.73% | 4.51% | 5.24% | 5.49% |

It is learned from Table 1 to Table 4 that, different silicon doping amounts and different target capacities are adjusted and controlled by different pre-lithiation amounts, capacities for 3 V of the experimental group 1 to the experimental group 4 are significantly increased relative to that of the comparative group 1. Electrode plates of batteries with different target capacities use metal lithium with different surface densities, battery capacities are increased, and target capacity values are reached.

It may be obtained intuitively from Table 1 to Table 4 that volume expansion rates of the batteries in the experimental groups after 100 charge-discharge cycles are all less than volume expansion rates of the batteries in the corresponding comparative groups after the 100 charge-discharge cycles. This indicates that the present disclosure can significantly improve a technical problem that the electrode plates are prone to volume expansion.

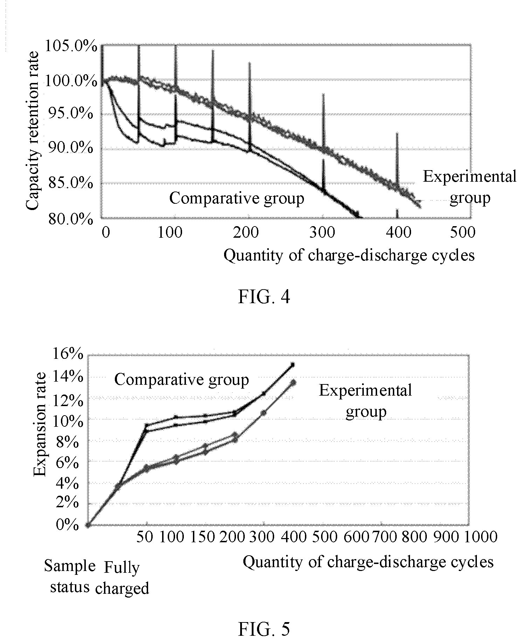

The testing results in step 9 are shown in FIG. 5. It may be learned from FIG. 5 that a horizontal coordinate represents a quantity of charge-discharge cycles, and a vertical coordinate represents an expansion rate. In a fully charged state, an expansion rate of a battery provided in the present disclosure is less than that of an existing battery, and an effect of improving battery expansion is obvious. In the battery provided in the present disclosure, a silicate skeleton layer 30 is generated in the second electrode plate, so that relative expansion in a cycle process may be reduced.

FIG. 4 is a comparison diagram of cycling performance curves of a battery provided in the present disclosure and an existing battery. A horizontal coordinate represents a quantity of charge-discharge cycles, and a vertical coordinate represents a capacity retention rate of a battery. It may be learned from FIG. 4 that, the battery provided in the present disclosure reduces a capacity of the battery to 80% after 450 charge-discharge cycles are completed, and a capacity of the existing battery decreases to 80% after 350 charge-discharge cycles are completed. Therefore, a cycling performance of the battery provided in the present disclosure increases by about 100 charge-discharge cycles, and a corresponding capacity retention rate of the battery increases by about 5% to 15%. Therefore, in the present disclosure, an improvement is made, so that an effect of improving a capacity of the battery is obvious, and an effect of improving cycling performance of the battery is also obvious.

It should be noted that, the numerical values and numerical ranges in the present disclosure are approximate values, and may have errors in a specific range due to an impact of a manufacturing process, but a person skilled in the art may consider these errors to be negligible.

In the descriptions of the present disclosure, it should be understood that the orientations or positional relationships indicated by the terms "center", "length", "width", "thickness", "top", "bottom", "upper", "lower", "left", "right", "front", "back", "vertical", "horizontal", "inner", "outer", "axial", "circumferential", and the like are based on the orientations or positional relationships shown in the accompanying drawings. Such terms are merely intended to facilitate the descriptions of the present disclosure and simplify the descriptions, without indicating or implying that the positions or components mentioned in the present disclosure must have specific orientations, or be constructed and operated in a specific orientation, and therefore shall not be construed as a limitation to the present disclosure.

In addition, the terms "first", "second", and the like are merely intended for a purpose of description, and shall not be understood as an indication or implication of relative importance or implicit indication of the number of indicated technical features. Therefore, the features defined by "first", "second", and the like may indicate or imply that one or more of the features are included. In the description of the present disclosure, "a plurality of" means at least two, for example, two or three, unless otherwise explicitly and specifically defined.

In the present disclosure, unless specified and defined explicitly otherwise, the terms "mounted", "join", "connect", "fixed", and the like should be understood in a broad sense. For example, "connection" may be a fixed connection, a detachable connection, or an integral connection; or may be a mechanical connection, an electrical connection, or a mutual communication; or may be a direct connection or an indirect connection by means of an intermediate medium; or may be an internal communication or an interactive relationship between two elements. Persons of ordinary skill in the art may understand specific meanings of these terms in the present disclosure based on specific situations.

In the present disclosure, unless specified and defined explicitly otherwise, the expression that the first feature is "on" or "below" the second feature may include that the first feature is in direct contact with the second feature, and may also include that the first feature and the second feature are not in direct contact with each other, but are contacted via another feature formed therebetween. Moreover, that the first feature is "above", "over", and "on" the second feature includes that the first feature is directly above or obliquely above the second feature, or merely indicates that the first feature is higher than the second feature in horizontal height. That the first feature is "below", "under" and "beneath" the second feature includes that the first feature is directly below or obliquely below the second feature, or simply indicates that the first feature is lower than the second feature in horizontal height.

Finally, it should be noted that the foregoing embodiments are merely intended for describing the technical solutions of the present disclosure but not for limiting the present disclosure. Although the present disclosure is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of the present disclosure.

## Claims

1. An electrode plate, **characterized by** comprising a current collector (10) and an active material layer (20) disposed on at least one surface of the current collector (10), wherein the active material layer (20) comprises active material particles, the active material particles comprise a silicon-based material, a skeleton layer (30) is provided outside the silicon-based material, and a proportion of a fluorine element gradually increases in a direction from the silicon-based material to the skeleton layer (30).

2. The electrode plate according to claim 1, **characterized in that** a proportion of a carbon element gradually increases in the direction from the silicon-based material to the skeleton layer (30).

3. The electrode plate according to claim 2, **characterized in that** a proportion of a silicon element gradually decreases in the direction from the silicon-based material to the skeleton layer (30).

4. The electrode plate according to claim 3, **characterized in that** a position at which the skeleton layer (30) intersects the silicon-based material has a fluorine element.

5. The electrode plate according to any one of claims 1 to 4, **characterized in that** the active material particles further comprise a carbon-based material distributed around the skeleton layer (30).

6. The electrode plate according to claim 5, **characterized in that** a position at which the skeleton layer (30) intersects the carbon-based material has a phosphorus element.

7. The electrode plate according to claim 6, **characterized in that** a position at which the skeleton layer (30) intersects the carbon-based material has a sulfur element.

8. The electrode plate according to any one of claims 1 to 4, **characterized in that** the skeleton layer (30) comprises at least one of lithium fluoride or lithium carbonate.

9. The electrode plate according to claim 5, **characterized in that** the silicon-based material comprises at least one of a silicon material or a silicon oxide material, and a mass of the silicon material or the silicon oxide material accounts for 7% to 50% of a mass of the active material particles; and/or
the carbon-based material comprises at least one of graphite or hard carbon.

10. The electrode plate according to any one of claims 1 to 4, **characterized in that** the skeleton layer (30) is an inorganic salt.

11. The electrode plate according to claim 2, **characterized in that** the proportion of the carbon element increases from 18% to 61% in the direction from the silicon-based material to the skeleton layer (30).

12. The electrode plate according to claim 3, **characterized in that** the proportion of the silicon element decreases from 49% to 18% in the direction from the silicon-based material to the skeleton layer (30).

13. The electrode plate according to any one of claims 1 to 4, **characterized in that** the active material layer (20) is disposed on both surfaces of the current collector (10).

14. A battery cell, **characterized by** comprising a first electrode plate and a second electrode plate, and the second electrode plate is the electrode plate according to any one of claims 1 to 13.

15. A battery, **characterized by** comprising a seal housing and the battery cell according to claim 14, wherein the battery cell is located inside the seal housing.
